# EUROPÄISCHE PATENTANMELDUNG

(11) **EP 4 831 814 A1**
(43) Veröffentlichungstag der Anmeldung: **28.10.2026**
(21) Anmeldenummer: 25172583.4
(22) Anmeldetag: 25.04.2025
(51) Int. Cl.: G06F 11/3668, G06F 11/3698

(54) **EFFIZIENTE ERZEUGUNG VON INTEGRATIONSTESTS FÜR ANWENDUNGEN IN EINEM BETRIEBSSYSTEM**

(71) Anmelder: Robert Bosch GmbH, 70442 Stuttgart (DE)
(72) Erfinder: Jo, Min Hee, 70197 Stuttgart (DE); Schneider, Peter, 71088 Holzgerlingen (DE)

(57) **Zusammenfassung**

Offenbart wird ein computer-implementiertes Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem, umfassend Erzeugen der Integrationstests basierend auf einem oder mehreren Systemaufrufen der Anwendung, wobei jeweils bei Durchführen eines Integrationstests die Anwendung auf einem vorbestimmten Testdatensatz auf dem Betriebssystem ausgeführt wird und dabei ein oder mehrere Fehler in einer Systemaufrufantwort des Betriebssystems an die Anwendung injiziert werden.

## Beschreibung

### Stand der Technik

### Sicherheitskritische Systeme und Schutz eingebetteter Software

Sicherheitskritische Systeme, wie sie zum Beispiel in Branchen wie der Automobilindustrie, der Luft- und Raumfahrt und/oder der Medizintechnik zu finden sind, sind auf eingebettete Systeme angewiesen, die speziell auf ihre Funktionen zugeschnitten sind. Diese Systeme werden ganzheitlich konzipiert und entwickelt, um eine nahtlose Integration und einen zuverlässigen Betrieb aller Komponenten zu gewährleisten. Auch die Gewährleistung der funktionalen Sicherheit in diesen Systemen erfordert einen ganzheitlichen Ansatz. Umfassende Anforderungen und Spezifikationen sind notwendig, um potenzielle Gefahren zu identifizieren und zu mindern, die zu Systemausfällen führen könnten. Um die Fehler innerhalb des Systems systematisch zu verwalten, müssen Strategien zur Fehlervermeidung, Fehlerbehebung und/oder Fehlertoleranz angewendet werden, um die Wahrscheinlichkeit von Fehlern während des Entwurfs und der Entwicklung zu verringern und Fehler während der Prüfung und Verifizierung zu erkennen und zu beseitigen.

Das Aufkommen neuer Technologien wie Cloud-Computing, softwaredefinierte Fahrzeuge und/oder die weit verbreitete Nutzung von Open-Source-Software führen jedoch zur Einführung allgemeinerer Systementwicklungsansätze. Diese allgemeinen Entwicklungsansätze beinhalten oft die Verwendung von Komponenten wie x86-Hardware und Linux. Diese Systeme sind jedoch von Natur aus "unsicher", d.h. sie wurden nicht mit Blick auf die funktionale Sicherheit entwickelt, und werden in der Regel unabhängig von den Benutzeranwendungen entwickelt, die sie unterstützen.

### Sichere Linux- und Integrationstests

Unter den Mehrzweckbetriebssystemen ist Linux das beliebteste Open-Source-Betriebssystem, das eine Vielzahl von Hardware-Systemen unterstützt. Mit der Weiterentwicklung von Linux wächst jedoch auch seine Komplexität, wodurch neue Fehler entstehen, die sich möglicherweise auf die darauf laufenden Benutzeranwendungen ausbreiten können. Diese Probleme machen es schwierig, die Sicherheitsintegrität von Anwendungen zu gewährleisten, die auf einem Mehrzweckbetriebssystem wie Linux basieren.

Während Linux in der Regel keine Sicherheitsgarantien bietet, arbeitet die Automobilindustrie aktiv an Initiativen zur Entwicklung sicherheitszertifizierter Linux-Versionen, z.B.:
- Red Hat, das einen wichtigen Meilenstein für Linux im Fahrzeug mit funktionaler Sicherheitsbewertung und Zertifizierung für die Linux-Mathematikbibliothek erreicht hat; und/oder
- ELISA (Enabling Linux In Safety Critical Applications).

Ein Nachteil der bestehenden Ansätze besteht darin, dass sie sich in der Regel auf die Zertifizierung nur einer oder einer sehr begrenzten Anzahl spezifischer Versionen und Konfigurationen des Linux-Kernels konzentrieren (z.B. der Red Hat-Ansatz). Oder sie zeigen, dass eine bestimmte Linux-Konfiguration mit einer einzigen robusten sicherheitskritischen Anwendung über umfangreiche manuelle Analysen und Tests während der Entwicklungszeit ausreichend fehlerfrei funktioniert (z.B. der ELISA-Ansatz). Beide Strategien basieren auf einer gemeinsamen Annahme: Sie stützen sich auf eine relativ statische Softwareumgebung, in der die (eingebettete) Anwendungssoftware und/oder die Betriebssystemversion umfassend getestet und einmal bereitgestellt wird und sich während des Lebenszyklus des Systems nahezu nicht ändert.

Die Ansätze, die auf umfangreichen Integrationstests basieren, eignen sich möglicherweise gut für relativ statische eingebettete Setups, wie sie von den zuvor genannten Ansätzen angestrebt werden. Sie lassen sich jedoch nicht effizient für portable Anwendungssoftware skalieren, die in verteilten Systemen verwendet wird, wie z.B. in Edge- oder Cloud-Computing-Umgebungen. In dynamisch zusammengesetzten verteilten Systemen werden portable Anwendungen häufig auf verschiedenen Computerplattformen bereitgestellt und migriert, auf denen jeweils möglicherweise leicht unterschiedliche Versionen oder Konfigurationen von Linux oder anderen Betriebssystemen ausgeführt werden.

Während bestimmte Konfigurationen und/oder Betriebszustände möglicherweise angemessen funktionieren, könnten in anderen Konfigurationen und/oder Betriebszustände latente Fehler in der Linux- oder in einer anderen Betriebssystemumgebung ausgelöst werden, was zu unbeabsichtigtem und potenziell gefährlichem Verhalten der Anwendung führt. Mit zunehmender Anzahl von Zielplattformen und Betriebssystemversionen und/oder -konfigurationen steigt die Anzahl der erforderlichen Integrationstests exponentiell an. Darüber hinaus erschweren regelmäßige Betriebssystem-Software-Updates, wie z.B. Sicherheitspatches, in vernetzten Systemen die Situation zusätzlich, da sie während der gesamten Lebensdauer der Anwendung fortlaufende Regressions- und Integrationstests erforderlich machen. Angesichts der bestehenden Methoden wird es schwierig, diesen Testaufwand auf wirtschaftlich tragfähige Weise zu bewältigen.

### Systemaufrufe

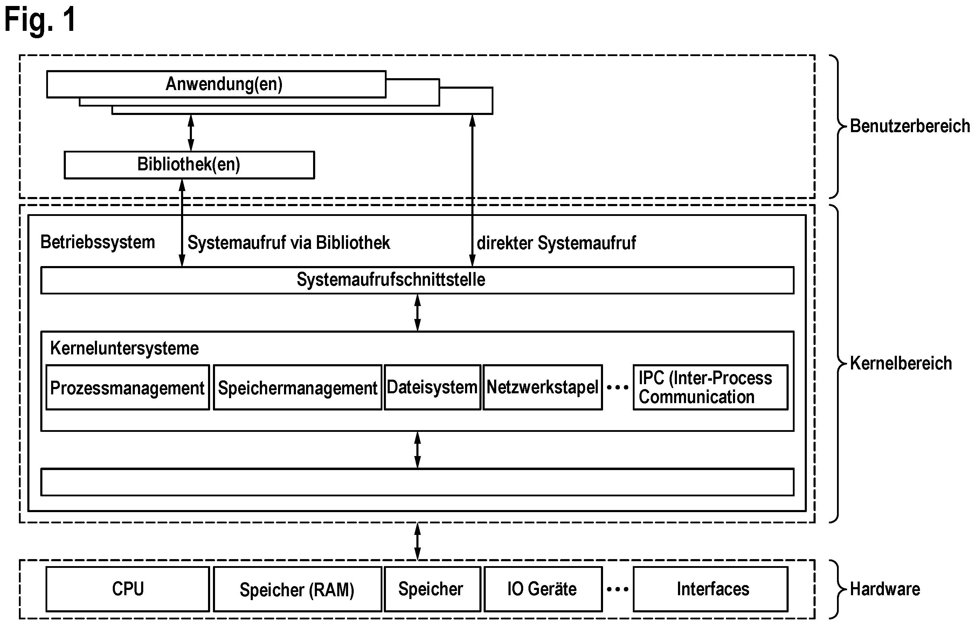

**Fig. 1** zeigt eine beispielhafte Systemarchitektur, die aus Benutzerbereich, Kernelbereich und Hardware besteht. Im Benutzerbereich werden Anwendungen auf Benutzerebene in einer eingeschränkten Umgebung ausgeführt, um die direkte Interaktion mit kritischen Systemkomponenten wie Betriebssystem und Hardware zu verhindern. Im Kernelbereich hingegen arbeitet das Betriebssystem mit vollständiger Kontrolle über die Hardware. Er bietet dem Benutzerbereich Dienste und Funktionen, darunter:
- Prozessverwaltung (z.B. Erstellung, Beendigung und Synchronisierung von Prozessen);
- Speicherverwaltung (z.B. Speicherzuweisung, Freigabe und Verwaltung von virtuellem Speicher);
- Dateisysteme (z.B. Dateioperationen, einschließlich Erstellung, Löschung, Lesen und Schreiben von Dateien);
- Geräteverwaltung (z.B. Vorgänge auf Hardware-Geräten wie Festplatten, Terminals und Netzwerkschnittstellen);
- Netzwerk (z.B. Verbindungsaufbau, Senden/Empfangen von Daten und Verwalten von Netzwerkressourcen);
- IPC (Inter-Process Communication) (Kommunikation und Synchronisierung zwischen Prozessen, z.B. Nachrichtenübermittlung und gemeinsamer Speicher)

Benutzeranwendungen fordern z.B. Linux-Kernel-Dienste über Systemaufrufe an, wie in **Fig. 1** dargestellt. Diese Systemaufrufe fungieren als Schnittstelle zwischen dem Benutzer- und dem Kernelbereich und ermöglichen die Ausführung privilegierter Vorgänge, wie z.B. die Verwaltung von Dateien, das Erstellen oder Beenden von Prozessen und die Interaktion mit Hardware. Wenn eine Benutzeranwendung eine Aufgabe ausführen muss, ruft sie einen Systemaufruf über eine Systemaufrufanforderung auf. Auf diese Anforderung hin führt der Kernel die angeforderte Operation mit vollem Zugriff auf die Systemressourcen aus und gibt das Ergebnis über Systemaufrufantworten an die Anwendung zurück.

Wie in **Fig. 1** dargestellt, können Systemaufrufe auf zwei Arten aufgerufen werden, nämlich durch einen direkten Aufruf und durch Verwendung von (Standard)bibliotheken. Beim direkten Aufruf interagieren die Anwendungen direkt mit dem Kernel, indem sie die Systemaufrufparameter in Registern oder im Speicher ablegen und dann eine spezielle Anweisung wie Interrupt auslösen, um die CPU umzuschalten, und so weiter. Bei dieser Methode müssen die Programmierer hardwareabhängige Assemblercodes für die Systemaufrufe verarbeiten. Im Gegensatz dazu werden bei der Verwendung von (Standard)bibliotheken, die der gängigen Praxis entspricht, von der Anwendung höherwertige Funktionen aufgerufen, die von einer Bibliothek bereitgestellt werden, die die Komplexität von Systemaufrufen abstrahiert. Die Bibliotheksfunktion führt den Systemaufruf intern durch, indem sie die Parameter vorbereitet und den Kernel aufruft, sodass die Programmierer sich nicht mit der Erstellung von Systemaufrufen befassen müssen, da die Bibliotheken die Interaktion mit dem Kernel für sie übernehmen.

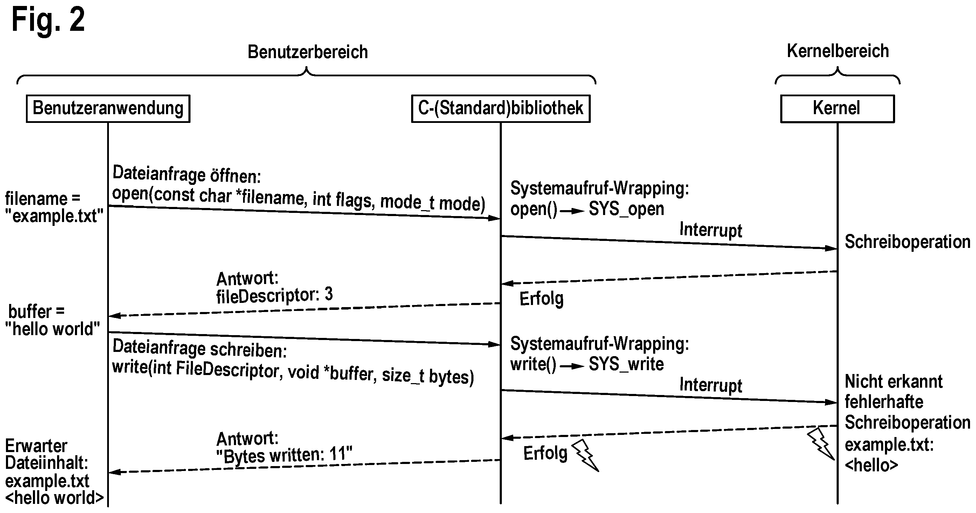

Die Systemaufrufe sind für jede Betriebssystemversion vordefiniert und ihre Anfrage- und Rückgabeformate variieren je nach Systemaufruf. Außerdem unterscheidet sich das Format je nachdem, ob der Aufruf erfolgreich ist oder fehlschlägt, wie in **Fig. 2** dargestellt. Wenn das Betriebssystem während der Verarbeitung des Systemaufrufs eine fehlerhafte Anforderung oder einen internen Fehler erkennt, gibt der Kernel in der Regel einen negativen Wert zurück, der z.B. von der C-(Standard)bibliothek einem Fehlercode zugeordnet wird. Wenn in z.B. Linux ein unbekannter Fehler vorliegt, kann dies zu Folgefehlern führen, die sich über Systemaufrufe ausbreiten können, wodurch der Ablauf der Anwendung möglicherweise beeinträchtigt wird und sie sich unvorhersehbar verhält oder abstürzt.

### Laufzeitfehlerinjektion und Fehlerüberwachung

Anstatt zu zeigen, dass eine bestimmte Betriebssystemversion oder -konfiguration sicher ist, besteht eine andere Lösung darin, Sicherheitsüberwachungsmechanismen zu entwickeln, um kritische Anwendungen vor potenziellen Fehlern im zugrunde liegenden Betriebssystem zu schützen. Um die Wirksamkeit solcher Überwachungsmechanismen zu zeigen, ist die Fehlerinjektion eine weit verbreitete Methode, mit der das Verhalten eines Systems als Reaktion auf verschiedene Fehler bewertet wird.

Um die Robustheit einer Anwendung gegenüber potenziellen Betriebssystemfehlern effektiv zu testen, reicht es in der Regel nicht aus, eine Anwendung über einen längeren Zeitraum hinweg erfolgreich auf einer bestimmten Betriebssystemversion und/oder in einer bestimmten Betriebssystemkonfiguration auszuführen, da Betriebssystemfehler inaktiv bleiben und sich nur unter relativ seltenen Betriebszuständen oder spezifischen Bedingungen manifestieren können. In diesem Zusammenhang können Fehlerinjektionsexperimente eingesetzt werden, um die Identifizierung kritischer Zustände oder Eingabekombinationen zu beschleunigen, die Betriebssystemfehler auslösen, was zu fehlerhaften Reaktionen an der Systemaufrufschnittstelle führt. Fehlerinjektionstechniken können die Auswirkungen von Fehlern direkt einführen, ohne dass die tatsächlichen Fehler auftreten müssen. Dies kann durch die Verfälschung von Daten an Komponentenschnittstellen erfolgen, wodurch die Auswirkungen von Fehlern und Stress-Tests effektiv simuliert werden können.

Beim System Call Fuzzing, einer speziellen Art der Fehlerinjektion, werden fehlerhafte, unerwartete oder zufällige Daten in Systemaufrufe eingefügt. Bestehende Fehlerinjektions-Frameworks fügen dazu realistische Fehler beim Aufruf von Systemaufrufen ein, um natürliche Fehler wie in realen Betriebsumgebungen zu erzeugen. Solche Frameworks verwendet vorab aufgezeichnete Fehler bei Systemaufrufen und erhöht deren Häufigkeit, um realistische Bedingungen zu simulieren. Da es jedoch auf beobachtete Fehler bei Systemaufrufen angewiesen ist, können verschiedene Grenzfälle nur eingeschränkt abgedeckt werden.

Andere Ansätze verwenden einen Fuzzer, welcher als unbeaufsichtigter, abdeckungsgesteuerter Kernel-Fuzzer arbeitet, der darauf abzielt, die Codeabdeckung zu maximieren und Kernel-Schwachstellen aufzudecken. Er ist jedoch stark von detaillierten, manuell erstellten Systemaufrufbeschreibungen abhängig, die die Struktur der Systemaufrufeingaben, das erwartete Verhalten und die Fehlerinjektionspunkte definieren. Die Erstellung dieser Beschreibungen ist sehr arbeitsintensiv, fehleranfällig und erfordert ein tiefes Verständnis jedes einzelnen Systemaufrufs, einschließlich seiner Parameter, Rückgabewerte und Fehlermodi. Daher wird es als unpraktisch angesehen, mehr als 300 verschiedene Linux-Systemaufrufe ausreichend abzudecken. Die Herausforderung steigt mit Systemaufrufen, die komplexe Datentypen wie Dateideskriptoren oder Zeiger verwenden, die auf gültige Dateien oder Speicherbereiche verweisen müssen.

Während diese Tools sich auf die Aufdeckung von Kernel-Fehlern durch Fuzzing von Systemaufrufanfragen konzentrieren, erfordert das Testen der Robustheit von Anwendungen einen anderen Ansatz. Beispielsweise implementieren Software Tools wie ChaosOrca ein Systemaufruf-Fehlerinjektions-Framework für containerisierte Anwendungen. ChaosOrca modelliert einige Fehlertypen, indem es vordefinierte Fehlercodes mit Verzögerungen kombiniert, um fehlerhafte Systemaufrufantworten zu simulieren. ChaosOrca arbeitet jedoch mit manuellen Eingaben von Fehlercodes pro Systemaufruf, was die Skalierbarkeit einschränkt und das Potenzial für menschliche Fehler erhöht und nicht alle relevanten Fehlertypen abdeckt, wie z.B. die Rückgabe undefinierter Fehlercodes, die Rückgabe von keinen Werten usw.

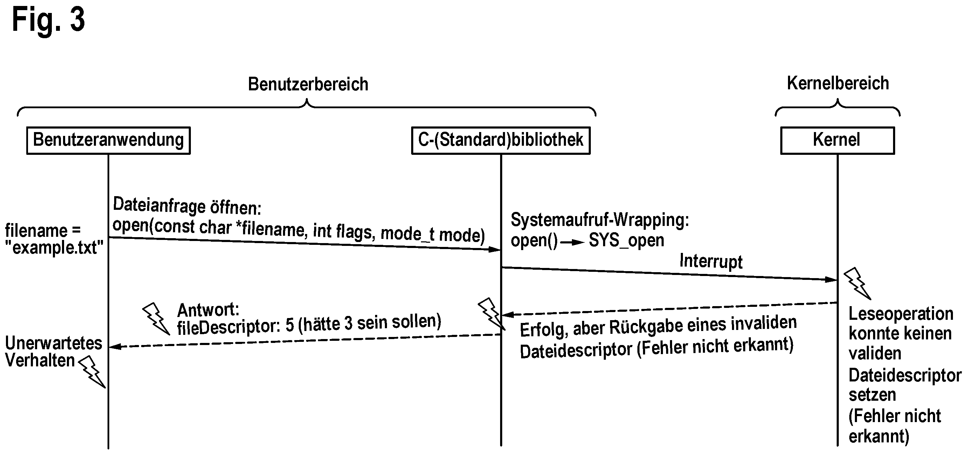

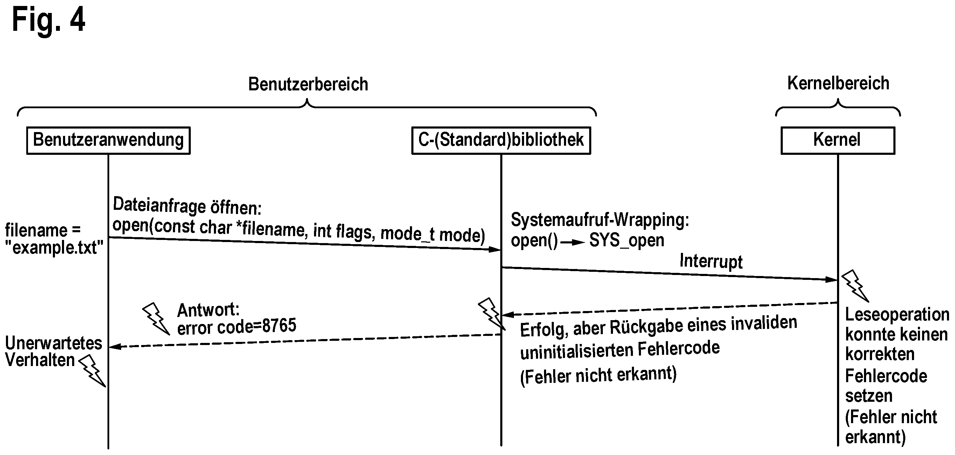

**Fig. 3-4** zeigen verschiedene der zuvor erwähnten Fehlertypen. **Fig. 3** zeigt den Fehler des open()-Systemaufrufs auf der Kernel-Ebene, bei dem der Kernel einen ungültigen Dateideskriptor festlegt und an die Benutzeranwendung weitergibt, ohne dass dies erkannt wird. **Fig. 4** zeigt die Fehler, die durch ungültige oder undefinierte Rückgabewerte verursacht werden. In diesem Fall ist die potenzielle Anzahl solcher Fälle enorm und die Auswirkungen auf das nachfolgende Verhalten einer Anwendung sind kaum vorhersehbar. Die C-Standardbibliothek kann diese Fehlertypen zwar teilweise abfangen und beheben, im schlimmsten Fall kann sie sie jedoch nicht erkennen, je nach der spezifischen Implementierung der Systemaufruf-Wrapper.

Bisher gibt es kein Verfahren zur automatischen Ableitung einer umfangreichen Reihe von Integrationstests, die auch ein breites Spektrum fehlerhafter Betriebssystemreaktionen für Anwendungen abdecken, die auf nicht sicherheitszertifizierten Allzweckbetriebssystemen ausgeführt werden. Als ein Schritt zur Behebung dieser Lücke wurden Verfahren zur Fehlerinjektion bei Systemaufrufen vorgeschlagen, um die Robustheit von Anwendungen in solchen Umgebungen zu bewerten. Diese Ansätze sind jedoch nach wie vor in ihrem Umfang begrenzt, da sie auf arbeitsintensiven, manuell erstellten Fehlerinjektionsfällen beruhen. Diese Abhängigkeit von manuellen Eingaben behindert die Skalierbarkeit erheblich, was es schwierig macht, Testfälle automatisch und schnell zu generieren, und somit die Durchführbarkeit umfassender, automatisierter Integrationstests mit einem Maß an Genauigkeit und Fehlerabdeckung, wie es für sicherheitsrelevante Anwendungen erwartet wird, einschränkt.

### Offenbarung der Erfindung

Ein erster allgemeiner Aspekt der vorliegenden Offenbarung betrifft ein computer-implementiertes Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem. Das Verfahren umfasst Erzeugen der Integrationstests basierend auf einem oder mehreren Systemaufrufen der Anwendung, wobei jeweils bei Durchführen eines Integrationstests die Anwendung auf einem vorbestimmten Testdatensatz auf dem Betriebssystem ausgeführt wird und dabei ein oder mehrere Fehler in einer Systemaufrufantwort des Betriebssystems an die Anwendung injiziert werden.

Ein zweiter allgemeiner Aspekt der vorliegenden Offenbarung betrifft ein Computer-System, das dafür ausgelegt ist, das computer-implementierte Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem, nach dem ersten allgemeinen Aspekt (oder einer Ausführungsform davon) auszuführen.

Ein dritter allgemeiner Aspekt der vorliegenden Offenbarung betrifft ein Computer-Programm oder Signal, das dafür ausgelegt ist, das computer-implementierte Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem, nach dem ersten allgemeinen Aspekt (oder einer Ausführungsform davon) auszuführen.

Ein vierter allgemeiner Aspekt der vorliegenden Offenbarung betrifft ein computer-lesbares Medium, das das Computer-Programm oder Signal nach dem dritten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die effiziente Erzeugung von sinnvollen Integrationstests für eine sicherheitsrelevante Anwendung eines technischen Systems auf einem im Hinblick auf die Sicherheit nicht zertifiziertem Betriebssystem gerichtet. Mithin wird ein Verfahren zur effizienten und automatischen Ableitung einer relevanten Reihe von Integrationstests, die auf Anwendungen zugeschnitten sind, die auf nicht sicherheitszertifizierten Linux-Systemen laufen, und die den kritischen Bedarf an Zuverlässigkeit in solchen Umgebungen decken. Durch die Verwendung von z.B. Large Language Models (LLMs) analysiert das Verfahren z.B. die Spezifikationen von Systemaufrufen und generiert gezielte Fehlerinjektionsszenarien, die eine Vielzahl potenzieller Fehler abdecken, einschließlich stiller Datenverfälschungen. Durch diesen Ansatz entfällt die Notwendigkeit der manuellen Erstellung von Testfällen (Fehlerinjektion), wodurch die Skalierbarkeit über verschiedene Betriebssystemversionen und - konfigurationen hinweg verbessert und gleichzeitig eine umfassende Fehlerabdeckung gewährleistet wird. Die Methode kann auch Kontrolltests - sogenannte "Golden Run"-Referenzausführungen - umfassen, um Ausgaben zu vergleichen und Diskrepanzen zu identifizieren, wodurch die Erkennung bisher unbekannter, aber anwendungsrelevanter kritischer Fehler verbessert wird. Letztendlich zielt dieses Verfahren darauf ab, die Sicherheitsintegritätsgarantien zur Laufzeit für dynamisch eingesetzte Sicherheitsanwendungen in verteilten COTS-Computerumgebungen (Commercial-off-the-Shelf) zu verbessern.

Das Herzstück des hier vorgeschlagenen Verfahrens (oder einer Ausführungsform davon) kann in der effizienten und automatisierten Ableitung einer relevanten Reihe von Integrationstests gesehen werden, die sich auf verschiedene Systemkonfigurationen, einschließlich verschiedener Betriebssystemversionen und -konfigurationen, anwenden lassen und gleichzeitig speziell auf die zu testende Anwendung zugeschnitten sind. Diese Methode erfüllt den Bedarf an umfassenden und fehlerreaktionsorientierten Integrationstestlösungen für sicherheitsrelevante Anwendungen, die auf nicht sicherheitszertifizierten Betriebssystemen (wie z.B. Linux) ausgeführt werden.

Ein Vorteil des hier vorgeschlagenen Verfahrens (oder einer Ausführungsform davon) kann in seiner Fähigkeit gesehen werden, sich kostengünstig und schnell an verschiedene Systemvarianten und -konfigurationen anzupassen, ohne dass manuelle Eingriffe erforderlich sind. Um gründliche und realistische Tests zu ermöglichen, automatisiert die Methode die Generierung von Testfällen durch Fehlerinjektion für Systemaufrufe, die als primäre Schnittstelle zwischen dem Betriebssystem und der Anwendung dienen.

Das Verfahren kann LLMs (Large Language Models) verwenden, um z.B. (i) die Syntax und Semantik von Systemaufrufen auf der Grundlage der verfügbaren Dokumentation und/oder des Quellcodes zu analysieren, (ii) die Spezifikationen der Systemaufrufe zu extrahieren und (iii) automatisch aussagekräftige Fehlerinjektionsszenarien zu generieren. Es überwindet (a) die Herausforderungen der manuellen Erstellung von Testfällen, bei denen menschlicher Aufwand erforderlich ist, um die Dokumentation zu lesen und Fehlerinjektions-Parameterbereiche zu definieren, und (b) die Ineffizienz automatisierter "Brute-Force"-Testmethoden, wie z.B. Fuzzing, die in einem praktisch unendlichen Zustandsraum arbeiten.

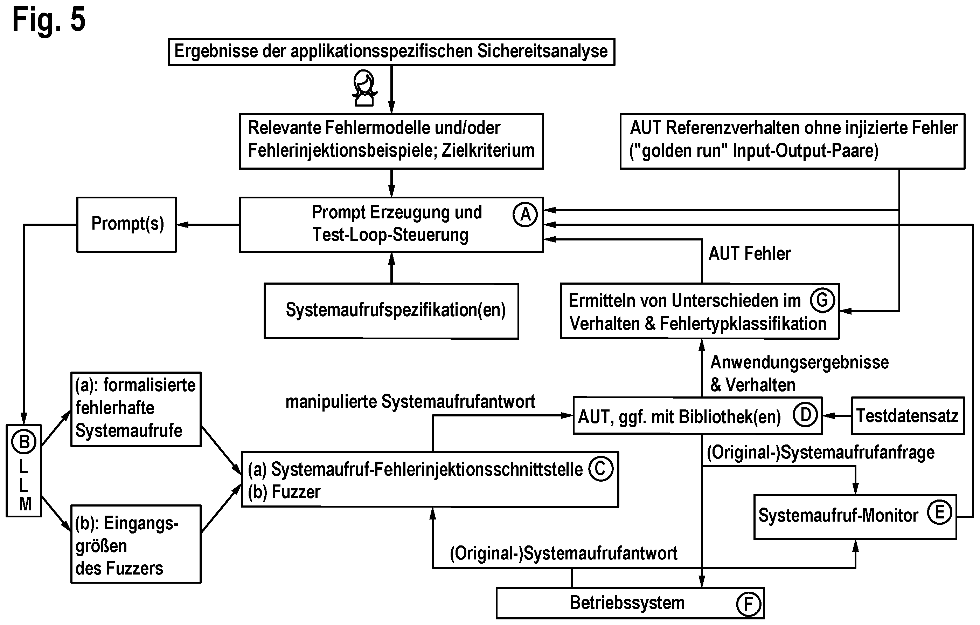

Um eine umfassende Fehlerinjektion zu erreichen, wird das LLM so gesteuert, dass es Testfälle generiert, die eine Reihe von hochrangigen Fehlerszenarien abdecken, wie z.B.:
- Rückgabe definierter oder undefinierter Fehlercodes (siehe z.B. **Fig. 4****);**
- Fehler bei der Rückgabe definierter Erfolgswerte (z.B. wird in **Fig. 5** der falsche Dateideskriptor zurückgegeben, obwohl er ungültig ist);
- Rückgabe von keinen Werten;
- Einführung von Verzögerungen.

Diese breite Abdeckung stellt sicher, dass Fehler im Zusammenhang mit Betriebssystemaufrufen, die sich kritisch auf die Anwendung auswirken könnten, während der (automatisierten) Bereitstellung zuverlässig über einen automatisierten Testprozess erkannt werden können.

Um die Relevanz der Fehlerinjektionsfälle unter tatsächlichen Betriebsbedingungen zu erhöhen, extrahiert die Methode Systemaufrufe aus früheren Ausführungen der Anwendung. Dieser gezielte Ansatz konzentriert die Fehlerinjektion auf Systemaufrufe, die direkt für die Anwendung relevant sind, wodurch der Testprozess sowohl realistisch als auch effizient wird.

Neben der Generierung von Testfällen priorisiert die Methode die Identifizierung derjenigen Fehler, die für die Sicherheitsanforderungen der AUT (Application Under Test) von Bedeutung sind. Dazu können Fehler gehören, die zu stillen Datenverfälschungen führen, bei denen eine Anwendung scheinbar korrekt funktioniert, aber dennoch falsche Ergebnisse liefert. Um dies zu beheben, verwendet das Verfahren einen sogenannten Golden Run (auch Kontrolltest) - eine Referenzausführung der Anwendung unter Verwendung eines bestimmten Datensatzes und einer bestimmten Konfiguration - neben der Ausführung der aussagekräftigen Testfälle. Durch die Erfassung der Golden Runs (der Ein- und Ausgaben korrekter Ausführungen) und den Vergleich mit den Ausgaben von Szenarien mit Fehlerinjektion identifiziert die Methode effektiv Diskrepanzen, die auf stille Datenkorruption hinweisen können. Infolgedessen ist der automatisch abgeleitete Testsatz mit dem jeweiligen Systemaufrufverhalten der Betriebssystemversionen kompatibel.

Das hier vorgeschlagenen Verfahren kann insbesondere in zwei Varianten verwendet werden:
1) Während der Anwendungsentwicklung: Um die Widerstandsfähigkeit der Anwendung gegen verschiedene fehlerhafte Verhaltensweisen von Betriebssystem-Systemaufrufen zu verbessern, können zusätzliche Prüfungen implementiert werden, wie z.B. das Rücklesen von geschriebenen Dateiinhalten, neben anderen Maßnahmen.
2) Während der Bereitstellungszeit: Um Inkompatibilitäten (in Bezug auf das "erwartete Betriebssystemverhalten" vs. das "beobachtbare Betriebssystemverhalten") zu identifizieren oder um Fehler in zuvor nicht getesteten Systemkonfigurationen zu erkennen, werden anwendungsspezifische sicherheitskritische Funktionalitäten oder Dienste erst nach erfolgreicher Durchführung der Integrationstests aktiviert.

Dieser systematische Ansatz stellt sicher, dass die getestete Anwendung auf verschiedenen Betriebssystemversionen/-konfigurationen sicher funktioniert, auch bei seltenen Betriebssystemfehlern. Einige Vorteile lassen sich wie folgt zusammenfassen:
- Gezielte, aber anwendungsunabhängige Methode zur Ableitung eines effizienten Satzes von Integrationstestfällen
- Automatisierung und Reduzierung manueller Arbeit
- Ermöglicht eine kostengünstige Abdeckung vieler Betriebssystemversionen/- konfigurationen, wodurch eine Beschleunigung der Entwicklung für verschiedene Zielplattformen erreicht wird.

Das hier offenbarte Verfahren ermöglicht aussagekräftige sicherheitsbezogene Inbetriebnahmetests, die beispielsweise in verteilten Anwendungen eingesetzt werden können.

### Kurzbeschreibung der Figuren

**Fig. 1** illustriert eine beispielhafte Systemarchitektur mit einer oder mehreren Anwendungen.
**Fig. 2** illustriert ein Beispiel für einen Systemaufruf mit Anfragen und Antworten mit fehlerhaftem Antwortwert in der "write"-Systemaufrufantwort.
**Fig. 3** illustriert ein Fehlschlagen des open()-Systemaufrufs auf Kernel-Ebene, bei dem der Kernel einen ungültigen Dateideskriptor festlegt, wobei das Fehlschlagen sich auf die Benutzeranwendung überträgt und zu unerwartetem Verhalten führen kann.
**Fig. 4** illustriert ein Fehlschlagen des open()-Systemaufrufs auf Kernel-Ebene, der den falschen Fehlercode setzt, wobei das Fehlschlagen sich auf die Benutzeranwendung überträgt und zu unerwartetem Verhalten führen kann.
**Fig.** 5 illustriert eine beispielhafte Ausführungsform mit Hauptkomponenten und ihren Interaktionen innerhalb des Integrationstest-Framework in einer Entwicklungsumgebung.
**Fig. 6a** illustriert beispielhafte Ausführungsformen des computer-implementierten Verfahrens zur Erzeugung von Integrationstests für eine sicherheitsrelevante Anwendung eines technischen Systems auf einem im Hinblick auf die Sicherheit nicht zertifiziertem Betriebssystem, wobei die Integrationstest durch ein Maschinenlernmodell erzeugt werden.
**Fig. 6b** illustriert beispielhafte Ausführungsformen des computer-implementierten Verfahrens zur Erzeugung von Integrationstests für eine sicherheitsrelevante Anwendung eines technischen Systems auf einem im Hinblick auf die Sicherheit nicht zertifiziertem Betriebssystem, wobei die Integrationstest durch ein Maschinenlernmodell sowie einen Fuzzer erzeugt werden.

### Detaillierte Beschreibung

Das Verfahren 100 kann auf die Effizienzsteigerung durch Ableitung einer breiten Palette von Integrationstests gerichtet sein. Bei der Entwicklung sicherheitsrelevanter Anwendungen (Software z.B. auf einem embedded system, einem Steuergerät, etc.) eines technischen Systems (z.B. eines Fahrzeugs oder Teilsystems davon, eines Roboters oder Teilsystems davon, einer Fertigungsmaschine in der Industrie, insbesondere zur Maschinensteuerung und/oder Prozessautomatisierung, etc.) kann die Methode zur automatischen Ableitung einer Reihe von Integrationstests verwendet werden, um die Kompatibilität und Fehlerreaktionen über verschiedene Betriebssystemversionen/Konfigurationen hinweg zu testen.

Alternativ oder zusätzlich kann das Verfahren 100 auf eine Laufzeit- und ressourcenoptimierte Systemaufruf-Überwachungsfunktion gerichtet sein. Das Verfahren 100 kann verwendet werden, um eine ressourceneffiziente Systemaufruf-Überwachungsfunktion (auch: Systemaufruf-Monitor) abzuleiten, die speziell zur Erkennung fehlerhafter/falscher Systemaufrufantworten konfiguriert ist, die als kritisch für das korrekte Verhalten der geschützten Anwendung identifiziert wurden. Eine solche Überwachungsfunktion kann als Gateway zwischen Betriebssystem und Anwendung eingesetzt werden und Systemaufrufantworten herausfiltern oder ändern, von denen bekannt ist, dass sie zu einem gefährlichen Anwendungsverhalten führen können. Eine solche Systemaufruf-Überwachungsfunktion kann die Komplexität und Entwicklung der geschützten Anwendung reduzieren, indem mehrere erkennbare seltene Fehler (und/oder Fehlercodes) im beobachtbaren Systemaufrufverhalten einem (oder wenigen) Standardfehlercode(s) zugeordnet werden. Diese vereinfachten Fehlercodes können dann zu einer Standardfehlerreaktion in der Anwendung führen, z.B. zur Passivierung sicherheitskritischer Funktionen/Dienste (abgesicherter Modus). Daher muss eine Anwendung kein breites Spektrum an Fehlerbehandlungslogik implementieren, um alle potenziellen Systemaufruffehler für verschiedene Betriebssystemversionen und/oder Standardbibliotheksimplementierungen abzudecken, sondern kann sich auf die automatisch generierte (basierend auf dem hier offenbarten Verfahren 100) Systemaufruf-Überwachungsfunktion verlassen, um in vielen potenziellen Betriebsumgebungen eine angemessene Fehlerreaktion auszulösen. Beispielsweise werden bei der Entwicklung zuverlässiger verteilter Systeme, bei denen sicherheitsrelevante Anwendungen in die Cloud oder in Infrastruktursysteme am Straßenrand verlagert werden, viele traditionelle Sicherheitsmechanismen und Sicherheitsargumente entweder nicht anwendbar sein (aufgrund der zunehmenden Komplexität) oder zu wirtschaftlich unattraktiven Lösungen führen (aufgrund des exponentiell zunehmenden manuellen Aufwands zur Abdeckung eines breiten Spektrums von Cloud-/Edge-Infrastruktursystemen). Wird das Verfahren 100 in einem generischen SW-Framework/Tool implementiert, kann es als Baustein für mehr Automatisierung in sicherheitstechnischen Systemen und Verifizierungsaktivitäten während der Produktentwicklung genutzt werden.

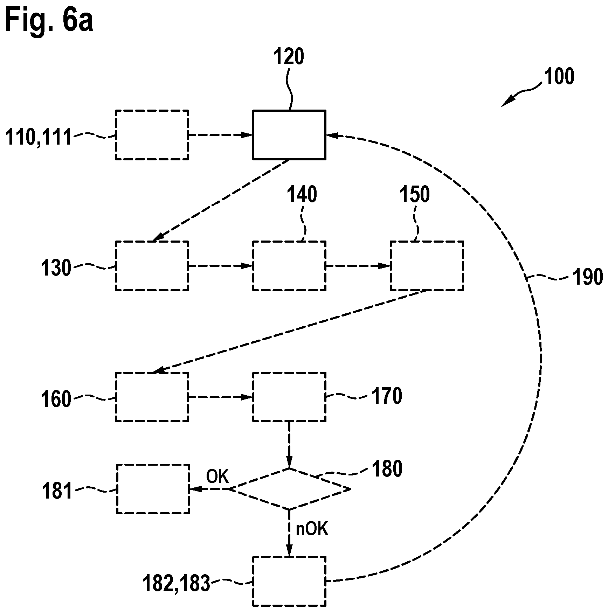

Offenbart wird ein computer-implementiertes Verfahren 100 zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem. Wie schematisch in **Fig. 6a****-b** dargestellt, umfasst das Verfahren 100 Erzeugen 120 der Integrationstests basierend auf einem oder mehreren Systemaufrufen der Anwendung, wobei jeweils bei Durchführen 130 eines Integrationstests die Anwendung auf einem vorbestimmten (d.h. zum Zeitpunkt der Ausführung dieses Verfahrensschritts vorbestimmten) Testdatensatz auf dem Betriebssystem ausgeführt wird und dabei ein oder mehrere Fehler in einer Systemaufrufantwort des Betriebssystems an die Anwendung injiziert werden.

Die sicherheitsrelevante und zu testende Anwendung (auch: die Anwendung) kann wie z.B. in **Fig. 5** als AUT (application under test) bezeichnet werden. Das im Hinblick auf die Sicherheit nicht zertifizierte Betriebssystem (auch: das Betriebssystem) kann in einer bestimmten Version und/oder Konfiguration vorliegen. Das technische System kann ein verteiltes System sein (z.B. Fahrzeug und Cloud).

In anderen Worten, in einem Integrationstest der Anwendung auf dem Betriebssystem wird mindestens eine Systemaufrufantwort, d.h. eine Antwort des Betriebssystems auf eine Anfrage (auch: Systemaufrufanfrage) eines Systemaufrufs der Anwendung abgefangen und derart manipuliert, dass sie mindestens einen Fehler enthält.

Das Erzeugen 120 der Integrationstests kann eine oder mehrere Datenstrukturen liefern, in denen die Integrationstests kodiert und/oder enthalten sind. Die eine oder die mehreren Datenstrukturen können ausführbar sein oder ein Input zum Ausführen sein.

Wie schematisch und optional in **Fig. 6a****-b** dargestellt, kann das Verfahren 100 weiterhin Durchführen 110 eines oder mehrerer Kontrolltests umfassen. Wie schematisch und optional in **Fig. 6a****-b** dargestellt, kann das Verfahren 100 weiterhin Ermitteln 111 des einen oder der mehreren Systemaufrufe, jeweils umfassend eine Systemaufrufanfrage und eine dazugehörige Systemaufrufantwort in dem einen oder den mehreren Kontrolltests, wobei in jeweils einem Kontrolltest die Anwendung auf dem vorbestimmten Testdatensatz auf dem Betriebssystem ausgeführt wird und dabei kein Fehler in der oder den Systemaufrufantworten des Betriebssystems an die Anwendung injiziert wird, umfassen. Die Schritte 110 und 111 können zum Beispiel wie in **Fig. 6a****-b** vor Schritt 120 erfolgen. Andererseits können sie auch nach Schritt 120 erfolgen.

Die einen oder mehreren Systemaufrufe der Anwendung können zum Beispiel in einem oder mehreren Kontrolltests (sogenannten "golden runs") bei Ausführen der Anwendung in einer Entwicklungsumgebung ermittelt werden, wobei insbesondere jeder Kontrolltest in der Entwicklungsumgebung ein fehlerloses Ausführen der Anwendung (auf dem vorbestimmten Testdatensatz) umfassen kann. Dabei können insbesondere Systemaufrufanfragen und dazugehörige Systemaufrufantworten abgefangen und protokolliert werden. Dies kann zum Beispiel durch einen Systemaufruf-Monitor, wie beispielhaft dargestellt in **Fig. 5****,** erfolgen. Das Berücksichtigen der einen oder mehreren (tatsächlichen) Systemaufrufen der Anwendung und deren Systemaufrufanfragen erhöht die Relevanz der für die zu testende Anwendung zu erzeugenden 120 Integrationstests.

Die Integrationstests stellen (im Gegensatz zu dem einen oder den mehreren Kontrolltests) eine Vielzahl von Fehlerinjektionstestfällen dar, die auf die Anwendung und das Betriebssystem, insbesondere deren Betriebssystemversion/-konfiguration zugeschnitten sind.

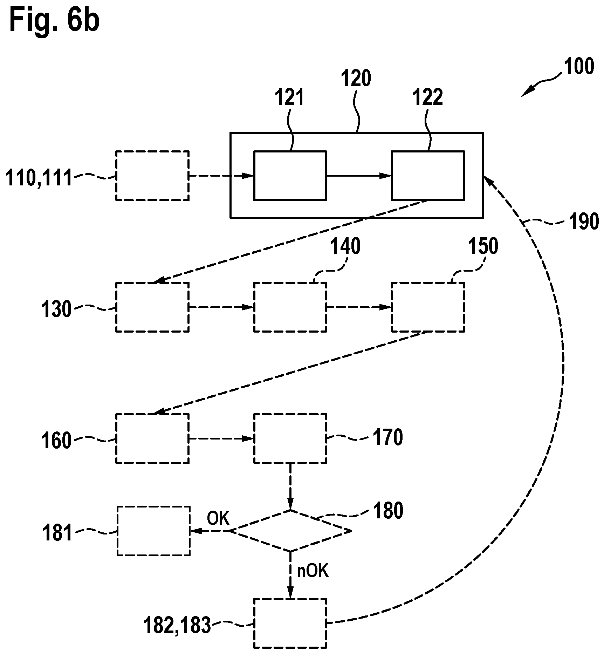

Das Erzeugen 120 der Integrationstests kann zum Beispiel von einem oder mehreren der folgenden Faktoren abhängen:
Das Erzeugen 120 der Integrationstests kann weiterhin auf einem oder mehreren Fehlermodellen basieren, insbesondere auf einer hazard and operability study, einer failure mode and effects analysis, einer fault tree analysis und/oder einer dependent failure analysis. Das eine oder die mehreren Fehlermodelle können jeweils oder zusammen eine Datenstruktur oder einen Text, insbesondere einen natürlichsprachlichen Text umfassen (oder eine Datenstruktur und/oder Text sein). Das eine oder die mehreren Fehlermodelle können semantische Fehlermodelle sein. Ein oder mehrere semantische Fehlermodelle können insbesondere aus einer hazard and operability study, einer failure mode and effects analysis, einer fault tree analysis und/oder einer dependent failure analysis abgeleitet werden (z.B. manuell und/oder computer-implementiert). Zum Beispiel können, wie schematisch in **Fig. 6** schematisch dargestellt, das eine oder die mehreren Fehlermodelle von einer Ingenieurin/von einem Ingenieur identifiziert und/oder (vor)ausgewählt werden. Mehrere semantische Fehlermodelle können in Abhängigkeit von Sicherheitsanforderungen der Anwendung priorisiert werden (z.B. können zeitliche Fehler als weniger kritisch gesehen werden als stille Datenverfälschungsfehler). Das Erzeugen 120 der Integrationstests kann auch auf einer solchen Priorisierung basieren. Hier kann also z.B. jeder Integrationstest nach dem angewandten Fehlermodell und der daraus resultierenden (manipulierten) Systemanrufanforderung und -antwort kategorisiert sein.

Alternativ oder zusätzlich kann das Erzeugen 120 der Integrationstests auf einem oder mehreren Fehlerinjektionsbeispielen basieren. Das eine oder die mehreren Fehlerinjektionsbeispiele können jeweils oder zusammen eine Datenstruktur oder einen Text, insbesondere einen natürlichsprachlichen Text umfassen (oder eine Datenstruktur und/oder Text sein). Durch ein oder mehrere Fehlerinjektionsbeispiele kann die Wahrscheinlichkeit erhöht werden, sinnvolle Integrationstests zu generieren. Mithin wird dadurch die Effizienz des Verfahrens 100 gesteigert.

Zum Beispiel können, wie schematisch in **Fig. 6** schematisch dargestellt, das eine oder die mehreren Fehlerinjektionsbeispiele von einer Ingenieurin/von einem Ingenieur identifiziert und/oder (vor)ausgewählt werden. Alternativ oder zusätzlich können Fehlerinjektionsbeispiele durch vorherige Ausführungen des Verfahrens 100, ggf. für ein ähnliches Projekt und/oder eine ähnliche weitere Anwendung - ermittelt werden (oder ermittelt worden sein).

Alternativ oder zusätzlich kann das Erzeugen 120 der Integrationstests auf einer oder mehreren Systemaufrufspezifikationen des Betriebssystems basieren. Die eine oder die mehreren Systemaufrufspezifikationen können jeweils oder zusammen eine Datenstruktur oder einen Text, insbesondere einen natürlichsprachlichen Text umfassen (oder eine Datenstruktur und/oder Text sein). Das Berücksichtigen von Systemaufrufspezifikationen ist vorteilhaft, weil dadurch gezielter und sinnvoller Systemaufrufantworten des Betriebssystems manipuliert werden können. Auch dadurch kann die Effizienz des Verfahrens 100 sowie die Testgüte insgesamt gesteigert werden.

Alternativ oder zusätzlich kann das Erzeugen 120 der Integrationstests auf einem oder mehreren festgestellten 140 Unterschieden im Verhalten der Anwendung auf dem Betriebssystem in mindestens einem bereits durchgeführten 110 Kontrolltest und in mindestens einem bereits durchgeführten 130, 170 Integrationstest basieren. Der eine oder die mehreren Unterschiede können jeweils oder zusammen eine Datenstruktur oder einen Text, insbesondere einen natürlichsprachlichen Text umfassen (oder eine Datenstruktur und/oder Text sein). Das Berücksichtigen von festgestellten 140 Unterschieden im Verhalten der Anwendung beim Erzeugen 120 der Integrationstests ist vorteilhaft, weil das Maschinenlernmodell dadurch gezielt dazu veranlasst werden kann, derart Integrationstests zu erzeugen, dass ein vorbestimmtes Zielkriterium des Verfahrens 100 schneller, besser und/oder überhaupt erreicht wird.

Zum Beispiel kann das Erzeugen 120 der Integrationstests (zusätzlich zu den Systemaufrufen der Anwendung) auf Fehlermodellen, Fehlerinjektionsbeispielen, Systemaufrufspezifikationen und festgestellten 140 Unterschieden basieren. Das Erzeugen 120 der Integrationstests kann (zusätzlich zu den Systemaufrufen der Anwendung) auch auf jeder Einzelauswahl davon (z.B. basierend auf Fehlermodellen) basieren. Das Erzeugen 120 der Integrationstests kann (zusätzlich zu den Systemaufrufen der Anwendung) auch auf jeder Zweifachkombination davon (z.B. basierend auf Fehlermodellen und Fehlerinjektionsbeispielen) basieren. Das Erzeugen 120 der Integrationstests kann (zusätzlich zu den Systemaufrufen der Anwendung) auch auf jeder Dreifachkombination (z.B. basierend auf Fehlermodellen und Fehlerinjektionsbeispielen und Systemaufrufspezifikationen) basieren. Das Erzeugen 120 der Integrationstests kann von weiteren Faktoren abhängen.

Im Folgenden werden zwei Implementierungen offenbart, die jeweils auf einem Maschinenlernmodell, insbesondere einem Large Language Model (LLM) basieren. Insbesondere durch das LLM kann ein allgemeines (z.B. hinsichtlich natürlicher Sprache) und zugleich spezielles (z.B. hinsichtlich von Programmierung und/oder technischer Sprache) Maschinensprachverständnis ausgenutzt werden.

Zum Beispiel kann, wie z.B. schematisch in **Fig. 6a** dargestellt, in bestimmten Ausführungsformen das Erzeugen 120 der Integrationstests durch ein Maschinenlernmodell erfolgen, insbesondere durch ein Large Language Model und basierend auf einem oder mehreren Prompts, wobei der eine oder die mehreren Prompts eine oder mehrere natürlichsprachliche Anweisungen an das Large Language Model umfasst.

Solche Ausführungsformen können als LLM Testfallgenerierung gesehen werden. Zum Beispiel können hier ein oder mehrere Prompts einen oder mehrere Systemaufrufe der Anwendung, einen oder mehrere Fehlermodelle, ein oder mehrere Fehlerinjektionsbeispiele, eine oder mehrere Systemaufrufspezifikationen des Betriebssystems, und/oder einen oder mehrere festgestellten 140 Unterschiede im Verhalten der Anwendung auf dem Betriebssystem in mindestens einem bereits durchgeführten 110 Kontrolltest und in mindestens einem bereits durchgeführten 130, 170 Integrationstest umfassen oder darauf basieren. Eine beispielhafte Unterkombination davon ist in **Fig. 5** gezeigt.

In solchen Ausführungsformen werden also die Integrationstests direkt (z.B. ohne Fuzzer) erzeugt 120.

In einem anderen Beispiel kann, wie z.B. schematisch in **Fig. 6b** dargestellt, in bestimmten Ausführungsformen das Erzeugen 120 der Integrationstests umfassen: Erzeugen 121 einer oder mehrerer Eingangsgrößen eines Fuzzer via ein Maschinenlernmodell, insbesondere via ein Large Language Model basierend auf einem oder mehreren Prompts, wobei der eine oder die mehreren Prompts eine oder mehrere natürlichsprachliche Anweisungen an das Large Language Model umfasst; und sodann Erzeugen 122 der Integrationstests via ein Fuzzer basierend auf der einen oder den mehreren erzeugten 121 Eingangsgrößen des Fuzzer.

Solche Ausführungsformen können alsFuzzing gesehen werden. Die einen oder mehreren Eingangsgrößen des Fuzzer können jeweils oder zusammen eine Datenstruktur sein. Zum Beispiel können sie in einer Konfigurationsdatei umfassend eine Fuzzer kompatible Datenstruktur gespeichert sein und in dieser Form an den Fuzzer übergeben werden.

Hier können also z.B. ein oder mehrere LLM (kurz für Large Language Model) Outputs als eine oder mehrere Eingangsgrößen (d.h. ein oder mehrere Konfigurationen) für Fuzzing erzeugt 121 werden, insbesondere Fuzzeranweisungen für die Erstellung der Rezepte, Grammatiken, Beschreibungen usw., je nach dem, welche Konfiguration für einen Fuzzer erforderlich ist.

Sowohl in Ausführungsformen der LLM Testfallgenerierung als auch in Ausführungsformen des Fuzzing können der eine oder die mehreren Prompts eine oder mehrere Vorgaben umfassen. Zum Beispiel kann eine Vorgabe gemacht werden, wie viele Integrationstests zu erzeugen sind (z.B. 100 Fälle pro Äquivalenzklasse der Fehlermodelle, etc.). Weitere Randbedingungen können berücksichtigt werden.

Im Folgenden werden weitere Verfahrensschritte offenbart:
Wie schematisch und optional in **Fig. 6a****-b** dargestellt, kann das Verfahren 100 weiterhin Durchführen 130 der Integrationstests bei Ausführen der Anwendung auf dem Betriebssystem in einer Entwicklungsumgebung umfassen.

Wie bereits diskutiert wird jeweils beim Durchführen 130 eines Integrationstests die Anwendung auf einem vorbestimmten Testdatensatz auf dem Betriebssystem ausgeführt, wobei dabei ein oder mehrere Fehler in mindestens einer Systemaufrufantwort des Betriebssystems an die Anwendung injiziert werden. In anderen Worten: Hier wird also je Integrationstest mindestens eine Systemaufrufantwort in einem Systemaufruf der Anwendung manipuliert. Diese Manipulation erfolgt üblicherweise dynamisch, d.h. bei Ausführen der Anwendung und im laufenden Betriebssystem.

Wie schematisch und optional in **Fig. 6a****-b** dargestellt, kann das Verfahren 100 weiterhin Feststellen 140 von Unterschieden im Verhalten der Anwendung auf dem Betriebssystem in mindestens einem bereits durchgeführten 110 Kontrolltest und in mindestens einem bereits durchgeführten 130 Integrationstest umfassen. Hierbei können insbesondere die Fehlerinjektionsergebnisse überwacht werden. Ein solcher Vergleich ist sinnvoll, da sowohl die einen oder mehreren Kontrolltests (golden runs) als auch die Integrationstests auf demselben vorbestimmten Testdatensatz durchgeführt werden. Dadurch können die Ergebnisse auf der Grundlage der beobachtbaren Fehlereffekte kategorisiert werden, z.B.:
- Keine Änderungen: Keine erkennbaren Auswirkungen auf die Funktionalität der Anwendung;
- Stille Datenkorruption: Falsche Ausgaben ohne angemessene Reaktion auf System-/Anwendungsfehler;
- Timeout: Erhebliche Verzögerungen über akzeptable Schwellenwerte hinaus;
- Absturz der Anwendung: Beendigung der Anwendung; und/oder
- Systemabsturz: Ausfall des Betriebssystems.

Wie schematisch und optional in **Fig. 6a****-b** dargestellt, kann das Verfahren 100 weiterhin Bewerten 150, ob und/oder inwieweit die durchgeführten 130 Integrationstests für die Anwendung sicherheitsrelevant sind, wobei ein Bewertungsergebnis je Integrationstest resultiert. Für diese Bewertung kann zum Beispiel eine oder mehrere vorbestimmte Metriken verwendet werden. Alternativ oder zusätzlich kann eine Statistik der Fehlerinjektionstestfall Validierung ausgewertet werden. Eine solche Statistik kann als Regelungsgröße für weitere Wiederholungen des Verfahrens verwendet werden. In anderen Worten, es kann das Verfahren (oder bestimmte Schritte davon) so lange wiederholt werden, bis die Statistik hinreichende Kriterien erfüllt.

Wie schematisch und optional in **Fig. 6a****-b** dargestellt, kann das Verfahren 100 weiterhin Auswählen 160 eines oder mehrerer der Integrationstests, die für die Anwendung sicherheitsrelevant sind, basierend auf den Bewertungsergebnissen, umfassen. Durch das Auswählen 160 des einen oder der mehreren Integrationstests wird die Effizienz des Testens erhöht. Andererseits können auch alle Integrationstests ausgewählt werden 160, so sie für die Anwendung sicherheitsrelevant sind. Alternativ kann der Schritt 160 übersprungen werden.

Wie schematisch und optional in **Fig. 6a****-b** dargestellt, kann das Verfahren 100 weiterhin Durchführen 170 der ausgewählten 160 einen oder mehreren Integrationstests (oder aller Integrationstests, falls Schritt 160 übersprungen wird) und, optional, Durchführen eines oder mehrerer Kontrolltests bei Ausführen der Anwendung auf dem Betriebssystem umfassen. Hier können also die ausgewählten 160 einen oder mehreren Integrationstest (oder alle Integrationstests) bei Ausführen der Anwendung auf dem Zielsystem/in der Produktionsumgebung, d.h. dem Betriebssystem in einer bestimmten Version/Konfiguration durchgeführt werden. Zum Beispiel können die ausgewählten 160 einen oder mehrere Integrationstests zusammen mit den Golden-Run-Input-Output-Paaren in der Produktionsumgebung eingesetzt werden, um die Anwendung unter Betriebsbedingungen z.B. auf der Grundlage von definierten Testauslöseregeln (z.B. Konfigurationsänderung, Systemaktualisierung, erste Bereitstellung, etc.) zu bewerten.

Wie schematisch und optional in **Fig. 6a****-b** dargestellt, kann das Verfahren 100 weiterhin Prüfen 180, basierend auf Ergebnissen der ausgewählten 160 und durchgeführten 170 Integrationstests, ob die Anwendung auf dem Betriebssystem hinreichend sicher ist, umfassen, wobei ein Prüfergebnis resultiert. Hier kann also insbesondere die Robustheit gegenüber sicherheitsrelevanten Fehlern bewertet werden, z.B.:
- Feststellen, ob die Robustheit der Anwendung gegenüber relevanten Fehlern den akzeptablen Schwellenwert erfüllt (z.B. sichere Fehlerbehandlung für >90 %, >99 % der Testfälle usw.).
- Wenn die Anwendung den Schwellenwert nicht erfüllt, kann der abgesicherte Modus aktiviert werden, um potenzielle Risiken zu mindern und die Sicherheitsintegrität zu schützen.
- Die Ergebnisse dieser Bewertung können genutzt werden, um den Testprozess weiter zu verfeinern, die Fehlertoleranz der Anwendung zu verbessern und/oder das System an sich verändernde Bedingungen anzupassen.

Wie schematisch und optional in **Fig. 6a****-b** dargestellt, kann das Verfahren 100 weiterhin Verwenden 181 der Anwendung auf dem Betriebssystem, insbesondere auf dem technischen System oder einem Teil davon umfassen, wenn das Prüfergebnis positiv ist. Das Verfahren 100 kann andererseits Nichtverwenden 182 oder Verwenden 183 der Anwendung auf dem technischen System oder einem Teil davon in einem abgesicherten Modus, wenn das Prüfergebnis negativ ist, umfassen.

Wie schematisch und optional in **Fig. 6a****-b** dargestellt, kann das Verfahren 100 weiterhin Wiederholen 190 des Verfahrens 100 umfassen, insbesondere wobei der eine oder die mehreren Prompts und/oder die Integrationstests angepasst und/oder erweitert werden, umfassen.

Im Folgenden wird ein Ausführungsbeispiel basierend auf einem LLM - LLM Testfallgenerierung, Variante a) bzw. Fuzzing, Variante b) - weiter beschrieben:
1) Fehlerfreie Erstausführung der AUT (Durchführen 110 mindestens eines Kontrolltests, "golden run") und Protokollierung des Referenzverhaltens:
   Die zu testende Anwendung (AUT, Element "D" in **Fig. 5****)** wird auf einem Betriebssystem (Element "F" in **Fig. 5****)** auf der Grundlage eines vorbestimmten (AUT-)Testdatensatzes fehlerfrei ausgeführt, insbesondere ohne Fehlerinjektion. Während dieser ersten Ausführung werden die Systemaufrufe und insbesondere deren Systemaufrufanfragen und Systemaufrufantworten zwischen der AUT und dem Betriebssystem protokolliert und als AUT-Referenzverhalten ohne injizierte Fehler in einem geeigneten Datenformat (z.B. einer Datenbank oder einer Protokolldatei) über einen Systemaufruf-Monitor (Element "E" in **Fig. 5****)** gespeichert.
2) LLM unterstützte Erstellung von Integrationstests, und zwar mit Fehlerinjektion: Auf Basis der Ergebnisse der AUT-Sicherheitsanalyse kann zum Beispiel eine Reihe relevanter Fehlermodelle und/oder Fehlerinjektionsbeispiele von einer Ingenieurin/einem Ingenieur identifiziert/vorausgewählt werden. Die "Prompt-Erzeugung und Test-Loop-Steuerung" (Element "A" in **Fig. 5****)** kann nun verwenden:
   (a) die abgeleiteten (relevanten) Fehlermodelle und/oder Fehlerinjektionsbeispiele;
   (b) die (relevanten) Systemaufrufe, die aus dem AUT-Referenzverhalten ohne injizierte Fehler extrahiert wurden; und/oder
   (c) Die relevanten Systemaufrufspezifikationen des Betriebssystems und/oder Entwicklerdokumentation und/oder Implementierungsdetails (z.B. in Form von Code oder Header-Dateien);
   um einen oder mehrere Prompts für ein LLM (Element "B" in **Fig. 5****)** zu generieren, mit dem Ziel, eine Reihe von Systemaufruffehlerinjektions-Testfällen zu erzeugen 120. Das LLM kann dabei das spezifische Wissen über z.B. AUT-Fehlermodelle und die Verwendung von AUT-Systemaufrufen mit dem generischen Wissen über die technischen Implementierungsdetails jedes betriebssystemspezifischen Systemaufrufs (z.B. Datentyp und Bedeutung von Systemaufrufparametern, gültige/ungültige Systemaufruf-Rückgabewerte, Systemaufruf-Fehlercodes usw.) kombinieren.
   Erwähnenswert ist, dass z.B. das Betriebssystem Linux mehr als 300 Systemaufrufe unterschiedlicher Komplexität aufweist. Mehrere Fehlertypen kombiniert mit bis zu 300 Systemaufrufen, welche wiederum mehrere Systemaufruf-Parameter-Variationen haben können ergibt bereits einige tausend mögliche Testfälle, die nur unter hohem Aufwand in einem "klassischen" manuellen Verfahren entwickelt werden könnten. Wichtig sind daher skalierbare und effiziente Fehlereinspeisungstests auch für Grenzfälle oder für nur sporadisch verwendete Systemaufrufschnittstellen.
   Variante a) Das LLM generiert eine Reihe ausführbarer Integrationstests, die an ein Systemaufruf-Fehlerinjektionsschnittstelle in der Testumgebung (z.B. strace in Linux) übergeben werden.
   Variante b) Das LLM generiert eine Konfiguration (ein oder mehrere Eingangsgrößen) für einen "Fuzzer" (ein Tool, das zufällige Tests über eine Schnittstelle durchführt, bis bestimmte Kriterien erfüllt sind), um den praktisch unendlichen Parameterraum potenzieller zufälliger Inputs auf einen angemessenen Bereich für jeden getesteten Systemaufruf und jeden systemaufrufspezifischen Parameter zu beschränken.
3) AUT-Ausführung mit simulierten Betriebssystemfehlern:
   Die AUT (Element D) kann nun neu initialisiert und erneut auf dem Testdatensatz ausgeführt werden, wobei die Systemaufrufe überwacht werden (durch Element E, z.B. durch einen Systemaufruf-Monitor). Im Vergleich zum Verfahrensschritt in 1) wird nun jedoch der vom LLM generierte (a) Integrationstestdatensatz oder (b) die Fuzzer-Konfiguration (in Element C) verwendet, um relevante Systemaufrufantworten abzufangen und zu manipulieren, um relevante Betriebssystemfehler zu simulieren und die Reaktion des AUT auf diese simulierten Betriebssystemfehler zu testen. Während der Ausführung kann eine separate Einheit (Element G) das Verhalten der automatisierten Anwendung unter dem Einfluss manipulierter Systemaufrufantworten in Bezug auf:
   a) von der automatisierten Anwendung erzeugte Ausgaben (z.B. in Dateien geschriebene Werte, Rückgabewerte, REST-Antworten usw.);
   b) das Zeitverhalten der automatisierten Anwendung;
   c) Abstürze oder unbeabsichtigtes Anhalten der automatisierten Anwendung; und/oder
   d) eine anormale Ressourcennutzung der automatisierten Anwendung (z.B. Speicherverbrauch, CPU-Auslastung, Netzwerkaktivität usw.)
      beobachten und bewerten. Diese Beobachtungen können (von Element G) verwendet werden, um das fehlerhafte Verhalten in Bezug auf vordefinierte Fehlermodelle/Fehlertypen zu klassifizieren, und das Klassifizierungsergebnis wird dann dem "Prompt-Erzeugung und Test-Loop-Steuerung" (Element A) zur Verfügung gestellt.
4) Iteration bis die Testendkriterien (z.B. das vorbestimmte Zielkriterium) erfüllt sind:
   Zum Beispiel protokolliert die "Prompt-Erzeugung und Test-Loop-Steuerung" (Element A) die AUT-Fehler (bereitgestellt durch Element G) in einer detaillierten Fehlerstatistik und wiederholt die Schritte 2) und 3), bis die benutzerdefinierten Testendkriterien erreicht sind. Die Testendkriterien können z.B. sein:
   a) statistische Kriterien in Bezug auf das AUT-Verhalten (z.B. 100 Fehler jedes relevanten Typs beobachtet; 10^6 insgesamt durchgeführte Testfälle usw.);
   b) Vollständigkeitskriterien in Bezug auf relevante Systemaufrufe (z.B. jeder Systemaufruf und Systemaufrufparameter getestet);
   c) Zeitbudget-/LLM-Ressourcenbudget-Kriterien (z.B. Testen für insgesamt eine Stunde; Testen bis die maximale Anzahl von Ein-/Ausgabe-Token des LLM erreicht ist)
   Auf Basis des Feedbacks zu "AUT-Fehlern" und der kumulierten Fehlerstatistik passt die "Prompt-Erzeugung und Test-Loop-Steuerung" die Prompting-Strategie an, um das LLM so zu steuern, dass es (mehr) Fehler generiert, und zwar vor allem die, die fehlen, um die Testendkriterien zu erreichen. Ein Beispiel: Wenn eine Systemaufrufantwort nie zu einem Fehler durch stille Datenkorruption geführt hat, die Testendkriterien jedoch mindestens zwei stille Datenkorruptionen erfordern, werden die von der "Prompt-Erzeugung und Test-Loop-Steuerung" generierten Prompts mit AUT-Fehlerrückmeldungen ergänzt, um dem LLM spezifische Einblicke in die AUT-Reaktion auf frühere Fehlerinjektionen zu geben und die Wahrscheinlichkeit zu erhöhen, dass das LLM eine bestimmte Injektion/Manipulation findet, die die gezielte AUT-Reaktion auslöst (in diesem Beispiel eine stille Datenkorruption). Sobald die festgelegten Testendkriterien erfüllt sind, kann der Testvorgang beendet werden.

Offenbart wird weiterhin ein Computer-System, das dafür ausgelegt ist, das computer-implementierte Verfahren 100 zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein Signal, das dafür ausgelegt ist, das computer-implementierte Verfahren zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem zu kodieren (und letztlich auszuführen). Das Signal kann eine Bit- oder Byte-Folge sein.

Offenbart wird weiterhin ein computer-lesbares Medium, das das Computer-Programm oder Signal speichert und/oder enthält. Das Medium kann z.B. eines von RAM, ROM, EPROM, HDD, SSD, ... umfassen, auf/in dem das Computer-Programm oder das Signal gespeichert ist.

## Patentansprüche

1. Computer-implementiertes Verfahren (100) zur Erzeugung von Integrationstests für eine sicherheitsrelevante Anwendung eines technischen Systems auf einem im Hinblick auf die Sicherheit nicht zertifiziertem Betriebssystem, insbesondere auf einem Linux-Betriebssystem, umfassend:
- Erzeugen (120) der Integrationstests basierend auf einem oder mehreren Systemaufrufen der Anwendung, wobei jeweils bei Durchführen (130) eines Integrationstests die Anwendung auf einem vorbestimmten Testdatensatz auf dem Betriebssystem ausgeführt wird und dabei ein oder mehrere Fehler in einer Systemaufrufantwort des Betriebssystems an die Anwendung injiziert werden.

2. Verfahren (100) nach Anspruch 1, umfassend:
- Durchführen (110) eines oder mehrerer Kontrolltests;
- Ermitteln (111) des einen oder der mehreren Systemaufrufe, jeweils umfassend eine Systemaufrufanfrage und eine dazugehörige Systemaufrufantwort in dem einen oder den mehreren Kontrolltests, wobei in jeweils einem Kontrolltest die Anwendung auf dem vorbestimmten Testdatensatz auf dem Betriebssystem ausgeführt wird und dabei kein Fehler in der oder den Systemaufrufantworten des Betriebssystems an die Anwendung injiziert wird.

3. Verfahren (100) nach Anspruch 1 oder 2, wobei das Erzeugen (120) der Integrationstests weiterhin auf einem oder mehreren Fehlermodellen basiert, insbesondere auf einer hazard and operability study, einer failure mode and effects analysis, einer fault tree analysis und/oder einer dependent failure analysis.

4. Verfahren (100) nach einem der vorhergehenden Ansprüche, wobei das Erzeugen (120) der Integrationstests weiterhin auf einem oder mehreren Fehlerinjektionsbeispielen basiert.

5. Verfahren (100) nacheinem der vorhergehenden Ansprüche, wobei das Erzeugen (120) der Integrationstests weiterhin auf einer oder mehreren Systemaufrufspezifikationen des Betriebssystems basiert.

6. Verfahren (100) nach einem der vorhergehenden Ansprüche, wobei das Erzeugen (120) der Integrationstests weiterhin auf einem oder mehreren festgestellten (140) Unterschieden im Verhalten der Anwendung auf dem Betriebssystem in mindestens einem bereits durchgeführten (110) Kontrolltest und in mindestens einem bereits durchgeführten (130, 170) Integrationstest basiert.

7. Verfahren (100) nach einem der vorhergehenden Ansprüche, wobei das Erzeugen (120) der Integrationstests durch ein Maschinenlernmodell erfolgt, insbesondere durch ein Large Language Model und basierend auf einem oder mehreren Prompts, wobei der eine oder die mehreren Prompts eine oder mehrere natürlichsprachliche Anweisungen an das Large Language Model umfasst.

8. Verfahren (100) nach einem der Ansprüche 1 bis 6, wobei das Erzeugen (120) der Integrationstests umfasst:
- Erzeugen (121) einer oder mehrerer Eingangsgrößen eines Fuzzer via ein Maschinenlernmodell, insbesondere via ein Large Language Model basierend auf einem oder mehreren Prompts, wobei der eine oder die mehreren Prompts eine oder mehrere natürlichsprachliche Anweisungen an das Large Language Model umfasst;
- Erzeugen (122) der Integrationstests via ein Fuzzer basierend auf der einen oder den mehreren erzeugten (121) Eingangsgrößen des Fuzzer.

9. Verfahren (100) nach einem der vorhergehenden Ansprüche, umfassend:
- Durchführen (130) der Integrationstests bei Ausführen der Anwendung auf dem Betriebssystem in einer Entwicklungsumgebung.

10. Verfahren (100) nach einem der vorhergehenden Ansprüche, umfassend:
- Feststellen (140) von Unterschieden im Verhalten der Anwendung auf dem Betriebssystem in mindestens einem bereits durchgeführten (110) Kontrolltest und in mindestens einem bereits durchgeführten (130) Integrationstest.

11. Verfahren (100) nach Anspruch 9 oder 10, umfassend:
- Bewerten (150), ob und/oder inwieweit die durchgeführten (130) Integrationstests für die Anwendung sicherheitsrelevant sind, wobei ein Bewertungsergebnis je Integrationstest resultiert.

12. Verfahren (100) nach Anspruch 11, umfassend:
- Auswählen (160) eines oder mehrerer der Integrationstests, die für die Anwendung sicherheitsrelevant sind, basierend auf den Bewertungsergebnissen.

13. Verfahren (100) nach Anspruch 12, umfassend
- Durchführen (170) der ausgewählten (160) einen oder mehreren Integrationstests und, optional, Durchführen eines oder mehrerer Kontrolltests bei Ausführen der Anwendung auf dem Betriebssystem.

14. Verfahren (100) nach Anspruch 13, umfassend:
- Prüfen (180), basierend auf Ergebnissen der ausgewählten (160) und durchgeführten (170) Integrationstests, ob die Anwendung auf dem Betriebssystem hinreichend sicher ist, wobei ein Prüfergebnis resultiert.

15. Verfahren (100) nach Anspruch 14, umfassend:
- Verwenden (181) der Anwendung auf dem Betriebssystem, insbesondere auf dem technischen System oder einem Teil davon, wenn das Prüfergebnis positiv ist.
